# EUROPEAN PATENT SPECIFICATION

(11) **EP 4 049 531 B1**
(45) Date of publication and mention of the grant of the patent: **11.12.2024**
(21) Application number: 22153324.3
(22) Date of filing: 25.01.2022
(51) Int. Cl.: A01G 17/08

(54) **TYING TOOL**
BINDEWERKZEUG
OUTIL D'ATTACHE

(30) Priority: 25.02.2021 IT 202100004346
(43) Date of publication of application: 31.08.2022
(73) Proprietor: Zanon S.R.L., 35011 Campodarsego PD (IT)
(72) Inventor: ZANON, Franco, 35011 CAMPODARSEGO PD (IT)
(74) Representative: Modiano, Micaela Nadia

(56) References cited:
- EP-A1- 2 936 972
- FR-A1- 2 849 832
- US-A1- 2004 020 550

## Description

The present invention relates to a tying tool.

The invention is applied in the agricultural field, in sectors such as viticulture and floriculture, but it can also be used for other types of fruit plants and vegetable cultivations.

In these sectors it is often necessary to secure the plants or branches to adapted supports in order to guide their growth.

This operation is carried out by means of ties to be applied in a totally manual way or with specific manual or automatic devices.

Tying tools are known among automatic devices; they are motorized and fed continuously with a flexible wire which is cut and tied automatically and in a controlled manner, and they allow to reduce significantly the tying time, thus improving productivity.

Normally, tying tools have a handle from which a tying region extends which in turn comprises:
- a hook-like terminal guide for the sliding of the wire,
- a twisting unit for the wire,
- a blade for cutting the wire.

In particular, the blade has a substantially cylindrical space occupation, containing a contrast blade also having a substantially cylindrical space occupation.

Such blade has a cutting portion which is arranged at right angles to the sliding direction of the wire and is able to rotate about the axis of the cylindrical space occupation between:
- an idle position, in which the wire can slide freely through the blade and between the blade and the contrast blade,
- an operating position, in which the cutting portion slides until it faces the contrast blade and cuts the wire interposed between them.

Tying tools have motor means which feed the tying region with the wire for the ties, making it advance from a wire supporting spool to the sliding guide.

In order to tie, for example, a vine shoot to a support, the sliding guide is positioned so as to surround, at least partially, the shoot resting against the support, and then the tying tool is activated.

Once activated, the wire advances, in the following order, through the blade, the twisting unit and the guide, so that it too surrounds the shoot resting against the support, then the blade cuts it to the appropriate size.

At this point it is twisted by the twisting unit, tightening onto itself and tying the shoot to the support, completing the tie.

This background art has some drawbacks.

First of all, in tying tools of the known type, the blade and the contrast blade are not easily accessible and in case of wire jamming or wedging of residues of ties in the cutting portion it may be necessary to disassemble the entire tying region, or a large part of it, in order to unjam the device and/or remove the residues and the mechanism.

This entails long and awkward operations, resulting in long periods of inactivity of the device itself and consequent interruption of processes.

In addition, tying tools of the known type normally have a large number of components for moving the wire.

For example, if one considers the tying tool taught in EP0763323A1, in the name of the PELLENC SA company, in this device the wire advances from a wire holder spool to the sliding guide through means driven by a gearmotor, by means of a transmission comprising an annular element engaged with a conical pinion keyed to the output shaft of said gearmotor.

The transmission of motion between the conical pinion and the annular element causes a reduction of the rotation rate.

Such annular element is mounted so as to rotate on a first axis and is coupled to a gear, which in turn is engaged with a pinion mounted on a second axis, which is axially offset with respect to the first one, and integral in rotation with a wire advancement roller, which is coaxial to the pinion and has a peripheral set of teeth for grip on the wire.

The advancement roller is pressed against a supporting roller, which rotates freely so that said wire slides between them.

The transmission of motion between the gear and the pinion causes a multiplication of the rotation rate.

Such known tying tool has the drawback of comprising a considerable number of components for the transmission of motion to the wire.

Furthermore, the tying tool also has a significant space occupation due to the need to accommodate all the components indispensable for the transmission of the motion in the arrangement described above.

Another example of tying tool can be seen in US2004/020550A1 which discloses the preamble of claim 1.

The aim of the present invention is to provide a tying tool capable of improving the background art in one or more of the aspects mentioned above.

Within this aim, an object of the invention is to provide a tying tool which allows to quickly unjam it and/or disengage the blade and/or the contrast blade if needed, reducing the periods of inactivity of the device.

Another object of the invention is to provide a tying tool that has fewer components for the transmission of motion to the wire and/or has a lower space occupation, due to said components, than similar tying tools of the known type and is therefore easier to handle.

Moreover, an object of the present invention is to overcome the drawbacks of the background art in a manner that is alternative to any existing solutions.

Not least object of the invention is to provide a tying tool that is highly reliable, relatively easy to provide and at competitive costs.

This aim and these and other objects which will become better apparent hereinafter are achieved by a tying tool according to claim 1, wherein a tying tool comprising a handle containing a gearmotor and a tying region, which extends from said handle and comprises, in the following order:
- a portion for cutting the tying wire,
- a twisting unit for said wire,
- a hook-like terminal guide for the sliding of said wire,
said tying tool being characterized in that it comprises means for the quick disassembly of said cutting portion and said cutting portion is contained within a support which has a substantially box-like body interposed between said gearmotor and said guide, said cutting portion comprising a blade which has a substantially tubular space occupation, containing a contrast blade having a substantially cylindrical space occupation which is coaxial to said blade.

Further characteristics and advantages of the invention will become better apparent from the description of a preferred embodiment of the tying tool according to the invention, illustrated by way of non-limiting example in the accompanying drawings, wherein:

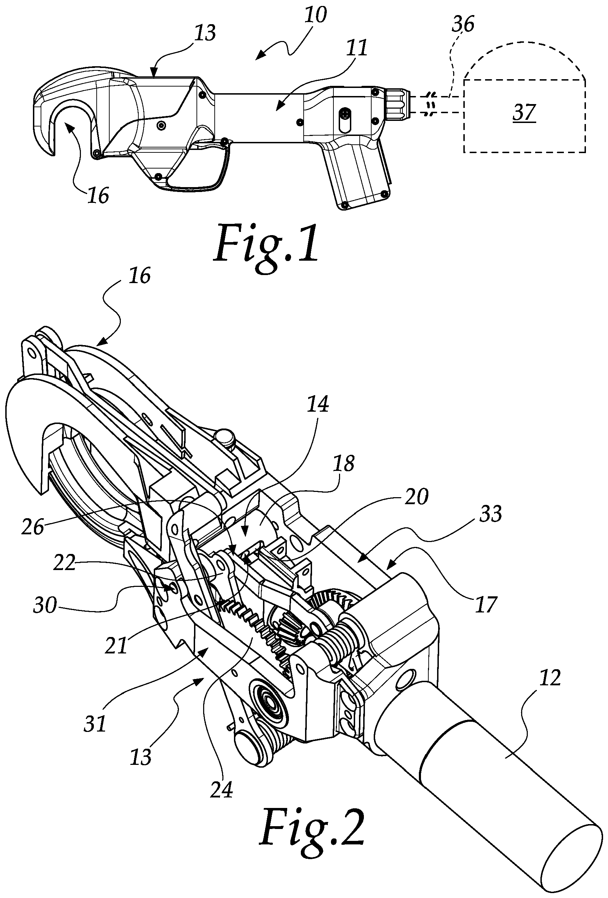

Figure 1 is a side view of a tying tool according to the invention;
Figure 2 is an interior perspective view of the tying tool of Figure 1 in a first configuration;

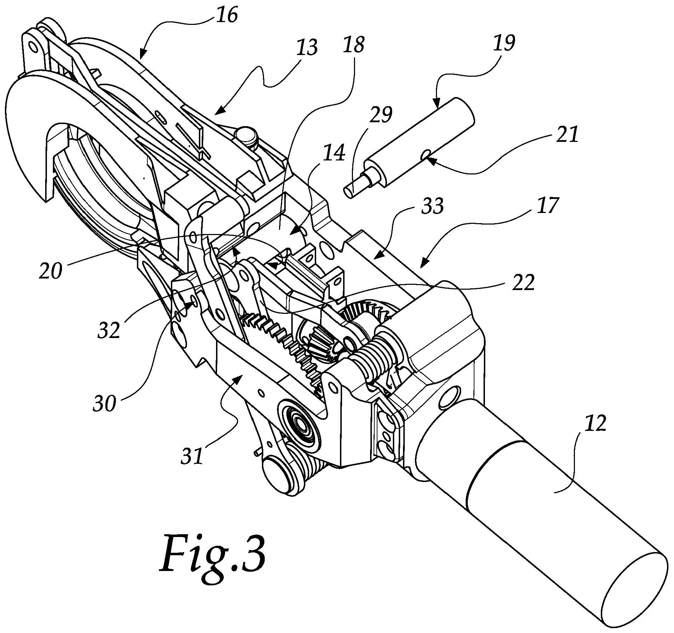

Figure 3 is a partially exploded interior perspective view of the tying tool of Figure 1 in a first configuration;
Figure 4 is an interior perspective view of the tying tool of Figure 1 in a second configuration;
Figures 5 and 6 are each a different view of an interior mechanism of the tying tool of Figure 1.

With reference to the figures, a tying tool according to the invention is generally designated by the reference numeral 10.

The tying tool 10 comprises a handle 11 containing a gearmotor 12, which is kinematically connected to a motor, not shown in the figures, and a tying region 13, which extends from the handle 11.

The tying region 13 comprises, in the following order:
- a portion 14 for cutting the tying wire,
- a twisting unit 15 for said wire,
- a hook-like terminal guide 16 for the sliding of said wire.

In particular, the cutting portion 14 is contained within a support 17 which has a substantially box-like body and is interposed between the gearmotor 12 and the guide 16.

The cutting portion 14 comprises a blade 18 which has a substantially tubular space occupation, containing a contrast blade 19 having a substantially cylindrical space occupation which is coaxial to the blade 18.

Such blade 18 has a cutting sector 20 which is arranged at right angles to the sliding direction of the wire and is able to rotate about the axis of the substantially tubular space occupation between:
- an idle position, in which the wire can slide freely through the blade 18 and between the blade 18 and the contrast blade 19,
- an operating position, in which the cutting sector 20 slides until it faces the contrast blade 19 and cuts the wire interposed between them.

The contrast blade 19, in turn, has a passage 21 for the tying wire toward the guide 16.

The passage 21 of the contrast blade 19 is located at the cutting sector 20 of the blade 18.

One of the particularities of the invention resides in that the tying tool 10 comprises means for the quick disassembly of the cutting portion 14.

In particular, the blade 18 is arranged in a receptacle 32, inside the support 17, which is at least partially shaped complementarily thereto.

The blade 18 has an appendage 22 adapted to interact with a cam element 23 of a gear 24 moved by motor means, not shown in the figures, for the actuation of the blade 18.

The appendage 22 extends from a first end 25 of the blade 18 on the plane that is perpendicular to the axis of the substantially tubular space occupation of the blade 18.

The blade 18 is hinged, at this first end 25 thereof, to a first end 26 of a supporting arm 27 of the blade 18, which in turn is hinged at a second end 28, which is opposite the first end 26, to the support 17.

The arm 27 has an extension that is perpendicular to the axis of extension of the blade 18 and is substantially parallel to the axis of extension of the tying tool 10.

The contrast blade 19 has an end pivot 29, with an axis of extension that coincides with and/or is parallel to the axis of extension of the contrast blade 19.

The pivot 29 is inserted in a corresponding through hole 30 of the support 17, which is arranged on a first wall 31 of the latter that is directed toward the appendage 22 of the blade 18 and is substantially parallel to said appendage 22.

The hole 30 is arranged at the receptacle 32.

The hole 30 allows a direct and quick access to the cutting portion 14.

In particular, in the operating configuration, the blade 18 contains the contrast blade 19, and the latter is arranged so that the pivot 29 is inserted in the hole 30.

In this manner, in practice, the contrast blade 19 couples the blade 18 to the receptacle 32.

The support 17 comprises a second wall 33, which is opposite and parallel to the first wall 31 and is provided with a through opening 34, at the receptacle 32, for the insertion and/or extraction of the contrast blade 19 from the blade 18 and from the support 17.

The first wall 31 and the second wall 33 of the support 17 lie on planes which are perpendicular to the axis of extension of the blade 18 and of the contrast blade 19.

If necessary, for example if it is necessary to free the cutting portion 14 from a wire fragment, it is sufficient to push the contrast blade 19, by acting on the pivot 29 from the hole 30, in order to extract it from the blade 18 by making it exit from the opening 34.

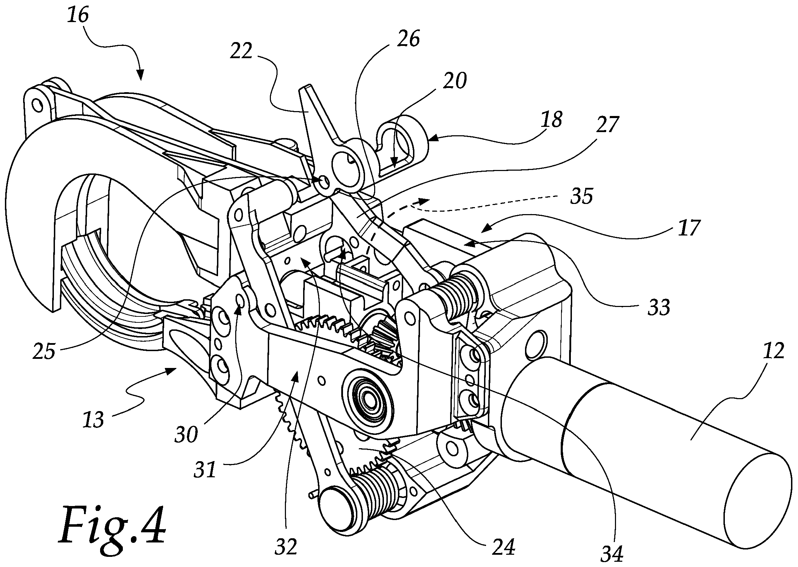

At this point it is possible to lift the arm 27 and the blade 18 in the direction of the arrow 35 of Figure 4, in order to be able to remove easily any wire fragments present in the cutting portion 14 and/or at the receptacle 32.

Another of the particularities of the invention resides in that the tying tool 10 comprises a wire protection sheath 36 between a spool holder 37 and the handle 11 and connected at its ends to both.

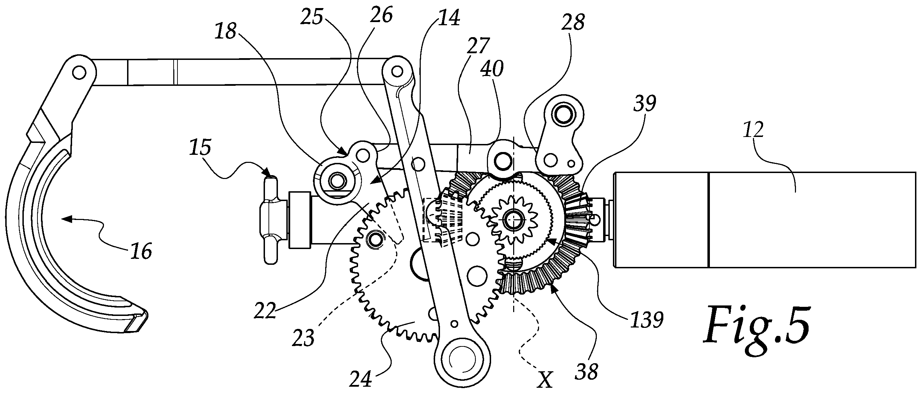

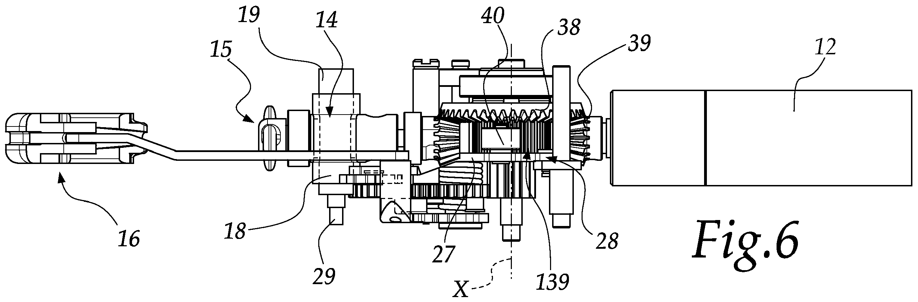

With reference to Figures 5 and 6, another particularity of the invention resides in the means for moving the wire, which are not shown in the figures.

In particular, the tying tool 10 comprises, for moving the wire from the spool, not shown in the figures, toward the guide 16: a gearmotor 12, which interacts with an annular element 38 engaged with a conical pinion 39 which is keyed on the output shaft of the gearmotor 12.

The annular element 38 is mounted rotatably on an axis X and rotating integrally with a roller 139 for the advancement of the wire, which is coaxial to the annular element 38 and mounted rotatably on the same axis X.

The advancement roller 139 has a peripheral set of teeth for grip on the wire.

The advancement roller 139 is pressed against a supporting roller 40, which rotates freely, so that the wire slides between them.

The supporting roller 40 is supported by the supporting arm 27 of the blade 18, at its second end 28.

It should be noted that the tying tool 10, due to the coaxial arrangement between the wire advancement roller 139 and the annular element 38, has a smaller number of components and/or a smaller space occupation than similar tying tools of the known type.

In practice it has been found that the invention has achieved the intended aim and objects, providing a tying tool which allows to quick unjam it and/or disengage the blade and/or the contrast blade if needed, reducing the periods of inactivity of the device.

The invention provides a tying tool that has fewer components for the transmission of motion to the wire and/or has a smaller space occupation, due thereto, than similar tying tools of the known type and is therefore easier to handle.

In practice, the materials used, so long as they are compatible with the specific use, as well as the contingent shapes and dimensions, may be any according to the requirements and the state of the art.

Mentioned here the disclosures in Italian Patent Application No. 102021000004346 from which this application claims priority.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A tying tool (10) comprising a handle (11) containing a gearmotor (12) and a tying region (13), which extends from said handle (11) and comprises, in the following order:
- a portion (14) for cutting the tying wire,
- a twisting unit (15) for said wire,
- a hook-like terminal guide (16) for the sliding of said wire,
said tying tool (10) comprising means for the quick disassembly of said cutting portion (14), **characterised in that** said cutting portion (14) is contained within a support (17) which has a substantially box-like body interposed between said gearmotor (12) and said guide (16), said cutting portion (14) comprising a blade (18) which has a substantially tubular space occupation, containing a contrast blade (19) having a substantially cylindrical space occupation which is coaxial to said blade (18).

2. The tying tool (10) according to claim 1, **characterized in that** said blade (18) has a cutting sector (20) arranged at right angles to the sliding direction of said wire and able to rotate about the axis of said substantially tubular space occupation between:
- an idle position, in which said wire can slide freely through said blade (18) and between said blade (18) and said contrast blade (19),
- an operating position, in which said cutting sector (20) slides until it faces said contrast blade (19) and cuts said wire interposed between them.

3. The tying tool (10) according to claim 2, **characterized in that** said contrast blade (19) has a passage (21) for said wire toward said guide (16), said passage (21) of said contrast blade (19) being located at said cutting sector (20) of said blade (18).

4. The tying tool (10) according to one or more of the preceding claims, **characterized in that** said blade (18) is arranged in a receptacle (32) that is at least partially shaped complementarily thereto, said blade (18) having an appendage (22) for interaction with a cam element (23) of a gear (24) moved by motor means for the actuation of said blade (18), said appendage (22) extending from a first end (25) of said blade (18), on the plane that is perpendicular to the axis of said substantially tubular space occupation of said blade (18).

5. The tying tool (10) according to claim 4, **characterized in that** said blade (18) is hinged at said first end (25) to a first end (26) of a supporting arm (27) of said blade (18), said arm being in turn hinged at a second end (28), which is opposite said first end (26), to said support (17), said arm (27) having an extension that is perpendicular to the axis of extension of said blade (18) and is substantially parallel to the axis of extension of said tying tool (10).

6. The tying tool (10) according to claim 5, **characterized in that** said contrast blade (19) has an end pivot (29), with an axis of extension that coincides with and/or is parallel to the axis of extension of said contrast blade (19), said pivot (29) being inserted in a corresponding through hole (30) of said support (17), said hole (30) being arranged on a first wall (31) of the latter that is directed toward said appendage (22) of said blade (18) and is substantially parallel to said appendage (22), said hole (30) being arranged at said receptacle (32).

7. The tying tool (10) according to claim 6, **characterized in that** said support (17) comprises a second wall (33), which is opposite and parallel with respect to said first wall (31) and is provided with a through opening (34), at said receptacle (32), for the insertion and/or extraction of said contrast blade (19) from said blade (18) and from said support (17).

8. The tying tool (10) according to claim 7, **characterized in that** said first wall (31) and said second wall (32) of said support (17) lie on planes which are perpendicular to the axis of extension of said blade (18) and of said contrast blade (19).

9. The tying tool (10) according to one or more of the preceding claims, **characterized in that** it comprises a wire protection sheath (36), adapted to be interposed between a spool holder (37) and said handle (11) and connected at its ends to both.

10. The tying tool (10) according to claim 1, further comprising, for the movement of said wire toward said guide (16): said gearmotor (12), which interacts with an annular element (38) engaged with a conical pinion (39) which is keyed on the output shaft of said gearmotor (12), said annular element (38) being mounted rotatably on an axis (X) and rotating integrally with a roller (139) for the advancement of said wire, said advancement roller (139) being coaxial to said annular element (38) and mounted rotatably on the same axis (X).

11. The tying tool (10) according to claim 10, **characterized in that** said advancement roller (139) is pressed on a supporting roller (40), which rotates freely so that said wire slides between them.

12. The tying tool (10) according to claim 10 or 11, **characterized in that** said advancement roller (139) has a peripheral set of teeth for grip on said wire.

## Patentansprüche

1. Ein Bindewerkzeug (10), das einen Griff (11) umfasst, der einen Getriebemotor (12) und einen Bindebereich (13) enthält, der sich von dem Griff (11) erstreckt und, in dieser Reihenfolge, Folgendes umfasst:
- einen Abschnitt (14) zum Schneiden des Bindedrahts,
- eine Drilleinheit (15) für den Draht,
- eine hakenähnliche Endführung (16) zum Gleiten des Drahts,
wobei das Bindewerkzeug (10) Mittel zum schnellen Abbau des Schneideabschnitts (14) umfasst, **dadurch gekennzeichnet, dass** der Schneideabschnitt (14) in einer Halterung (17) enthalten ist, die einen im Wesentlichen schachtelähnlichen Körper hat, angeordnet zwischen dem Getriebemotor (12) und der Führung (16), wobei der Schneideabschnitt (14) ein Messer (18) umfasst, das einen im Wesentlichen rohrförmigen Platzbedarf hat, ein Gegenmesser (19) mit im Wesentlichen zylindrischem Platzbedarf enthaltend, das koaxial mit dem Messer (18) ist.

2. Das Bindewerkzeug (10) gemäß Anspruch 1, **dadurch gekennzeichnet, dass** das Messer (18) einen Schneidesektor (20) hat, angeordnet in rechten Winkeln zu der Gleitrichtung des Drahts und fähig, sich um die Achse des im Wesentlichen rohrförmigen Platzbedarfs zu drehen zwischen
- einer Ruheposition, in welcher der Draht frei durch das Messer (18) und zwischen dem Messer (18) und dem Gegenmesser (19) gleiten kann,
- einer Arbeitsposition, in welcher der Schneidesektor (20) gleitet, bis er dem Gegenmesser (19) zugewandt ist und den zwischen ihnen angeordneten Draht schneidet.

3. Das Bindewerkzeug (10) gemäß Anspruch 2, **dadurch gekennzeichnet, dass** das Gegenmesser (19) einen Durchlass (21) für den Draht zu der Führung (16) hin hat, wobei der Durchlass (21) des Gegenmessers (19) sich an dem Schneidesektor (20) des Messers (18) befindet.

4. Das Bindewerkzeug (10) gemäß einem oder mehreren der obigen Ansprüche, **dadurch gekennzeichnet, dass** das Messer (18) in einer Aufnahmevorrichtung (32) angeordnet ist, die zumindest teilweise komplementär dazu geformt ist, wobei das Messer (18) einen Anhang (22) zum Zusammenwirken mit einem Nockenelement (23) eines Zahnrades (24) hat, das von Motormitteln für den Antrieb des Messers (18) bewegt wird; wobei der Anhang (22) sich von einem ersten Ende (25) des Messers (18) auf der Ebene erstreckt, die senkrecht zur Achse des im Wesentlichen rohrförmigen Platzbedarfs des Messers (18) ist.

5. Das Bindewerkzeug (10) gemäß Anspruch 4, **dadurch gekennzeichnet, dass** das Messer (18) mit seinem ersten Ende (25) an einem ersten Ende (26) eines Tragarms (27) des Messers (18) gelenkig befestigt ist, wobei der Arm wiederum mit einem zweiten Ende (28), das dem ersten Ende (26) gegenüberliegt, gelenkig an der Halterung (17) befestigt ist, wobei der Arm (27) eine Erstreckung hat, die senkrecht zur Erstreckungsachse des Messers (18) und im Wesentlichen parallel zur Erstreckungsachse des Bindewerkzeugs (10) ist.

6. Das Bindewerkzeug (10) gemäß Anspruch 5, **dadurch gekennzeichnet, dass** das Gegenmesser (19) einen Endzapfen (29) mit einer Erstreckungsachse hat, welche mit der Erstreckungsachse des Gegenmessers (19) zusammenfällt und/oder parallel dazu ist; wobei der Zapfen (29) in ein entsprechendes Durchgangsloch (30) der Halterung (17) eingeführt wird, wobei das Loch (30) sich in einer ersten Wand (31) der Letzteren befindet, die dem Anhang (22) des Messers (18) zugewandt und im Wesentlichen parallel zu dem Anhang (22) ist, wobei das Loch (30) an der Aufnahmevorrichtung (32) angeordnet ist.

7. Das Bindewerkzeug (10) gemäß Anspruch 6, **dadurch gekennzeichnet, dass** die Halterung (17) eine zweite Wand (33) umfasst, die der ersten Wand (31) gegenüberliegt und parallel dazu und zum Einführen und/oder Herausziehen des Gegenmessers (19) in das/aus dem Messer (18) und in die/aus der Halterung (17) an der Aufnahmevorrichtung (32) mit einer Durchgangsöffnung (34) versehen ist.

8. Das Bindewerkzeug (10) gemäß Anspruch 7, **dadurch gekennzeichnet, dass** die erste Wand (31) und die zweite Wand (32) der Halterung (17) auf Ebenen liegen, die senkrecht zur Erstreckungsachse des Messers (18) und des Gegenmessers (19) sind.

9. Das Bindewerkzeug (10) gemäß einem oder mehreren der obigen Ansprüche, **dadurch gekennzeichnet, dass** es eine Drahtschutzhülse (36) umfasst, ausgebildet, um zwischen einen Spulenhalter (37) und den Griff (11) positioniert und an ihren Enden mit beiden verbunden zu werden.

10. Das Bindewerkzeug (10) gemäß Anspruch 1, das weiter, für die Bewegung des Drahts zu der Führung (16) hin, Folgendes umfasst: den Getriebemotor (12), der mit einem Ringelement (38) zusammenwirkt, welches mit einem konischen Ritzel (39) in Eingriff steht, das auf der Abtriebswelle des Getriebemotors (12) verkeilt ist, wobei das Ringelement (38) drehbar an einer Achse (X) montiert ist und sich für den Vorschub des Drahts integral mit einer Rolle (139) dreht, wobei die Vorschubrolle (139) koaxial mit dem Ringelement (38) und drehbar an derselben Achse (X) montiert ist.

11. Das Bindewerkzeug (10) gemäß Anspruch 10, **dadurch gekennzeichnet, dass** die Vorschubrolle (139) auf eine Stützrolle (40) gepresst wird, die sich frei dreht, so dass der Draht zwischen ihnen gleitet.

12. Das Bindewerkzeug (10) gemäß Anspruch 10 oder 11, **dadurch gekennzeichnet, dass** die Vorschubrolle (139) für den Halt an dem Draht einen peripheren Zahnkranz hat.

## Revendications

1. Outil d'attache (10) comprenant une poignée (11) contenant un motoréducteur (12) et une région d'attache (13), qui s'étend à partir de ladite poignée (11) et comprend, dans l'ordre suivant :
une partie (14) pour couper le fil d'attache,
une partie de torsion (15) pour ledit fil,
un guide terminal à crochet (16) pour le coulissement dudit fil,
ledit outil d'attache (10) comprenant des moyens pour le démontage rapide de ladite partie de coupe (14), **caractérisé en ce que** ladite partie de coupe (14) est contenue à l'intérieur d'un support (17) qui a un corps sensiblement en forme de boîte intercalé entre ledit motoréducteur (12) et ledit guide (16), ladite partie de coupe (14) comprenant une lame (18) qui a une occupation de l'espace sensiblement tubulaire, contenant une lame antagoniste (19) ayant une occupation de l'espace sensiblement cylindrique qui est coaxiale par rapport à ladite lame (18).

2. Outil d'attache (10) selon la revendication 1, **caractérisé en ce que** ladite lame (18) a un secteur de coupe (20) agencé en angle droit par rapport à la direction de coulissement dudit fil et pouvant tourner autour de l'axe de ladite occupation de l'espace sensiblement tubulaire entre :
une position de repos, dans laquelle ledit fil peut coulisser librement à travers ladite lame (18) et entre ladite lame (18) et ladite lame antagoniste (19),
une position opérationnelle, dans laquelle ledit secteur de coupe (20) coulisse jusqu'à ce qu'il fasse face à ladite lame antagoniste (19) et coupe ledit fil intercalé entre eux.

3. Outil d'attache (10) selon la revendication 2, **caractérisé en ce que** ladite lame antagoniste (19) a un passage (21) pour ledit fil vers ledit guide (16), ledit passage (21) de ladite lame antagoniste (19) étant positionné au niveau dudit secteur de coupe (20) de ladite lame (18).

4. Outil d'attache (10) selon une ou plusieurs des revendications précédentes, **caractérisé en ce que** ladite lame (18) est agencée dans un réceptacle (32) qui est au moins partiellement formé de manière complémentaire par rapport à cette dernière, ladite lame (18) étant un appendice (22) pour l'interaction avec un élément de came (23) d'une roue (24) déplacée par des moyens moteurs pour l'actionnement de ladite lame (18), ledit appendice (22) s'étendant à partir d'une première extrémité (25) de ladite lame (18), sur le plan qui est perpendiculaire à l'axe de ladite occupation de l'espace sensiblement tubulaire de ladite lame (18).

5. Outil d'attache (10) selon la revendication 4, **caractérisé en ce que** ladite lame (18) est articulée au niveau de ladite première extrémité (25) à une première extrémité (26) d'un bras de support (27) de ladite lame (18), ledit bras étant à son tour articulé au niveau d'une seconde extrémité (28), qui est opposée à ladite première extrémité (26), audit support (17), ledit bras (27) présentant une extension qui est perpendiculaire à l'axe d'extension de ladite lame (18) et est sensiblement parallèle à l'axe d'extension dudit outil d'attache (10).

6. Outil d'attache (10) selon la revendication 5, **caractérisé en ce que** ladite lame antagoniste (19) a un pivot d'extrémité (29), avec un axe d'extension qui coïncide avec et/ou est parallèle à l'axe d'extension de ladite lame antagoniste (19), ledit pivot (29) étant inséré dans un trou débouchant (30) correspondant dudit support (17), ledit trou (30) étant agencé sur une première paroi (31) de ce dernier qui est dirigée vers ledit appendice (22) de ladite lame (18) et est sensiblement parallèle audit appendice (22), ledit trou (30) étant agencé au niveau dudit réceptacle (32).

7. Outil d'attache (10) selon la revendication 6, **caractérisé en ce que** ledit support (17) comprend une seconde paroi (33) qui est opposée et parallèle par rapport à ladite première paroi (31) et est prévue avec une ouverture débouchante (34), au niveau dudit réceptacle (32), pour l'insertion et/ou l'extraction de ladite lame antagoniste (19) de ladite lame (18) et dudit support (17).

8. Outil d'attache (10) selon la revendication 7, **caractérisé en ce que** ladite première paroi (31) et ladite seconde paroi (32) dudit support (17) se trouvent sur des plans qui sont perpendiculaires à l'axe d'extension de ladite lame (18) et de ladite lame antagoniste (19).

9. Outil d'attache (10) selon une ou plusieurs des revendications précédentes, **caractérisé en ce qu'**il comprend une gaine de protection de fil (36), adaptée pour être intercalée entre un dispositif de support de bobine (37) et ladite poignée (11) et raccordée au niveau de ses extrémités à ces deux.

10. Outil d'attache (10) selon la revendication 1, comprenant en outre, pour le déplacement dudit fil vers ledit guide (16) : ledit motoréducteur (12) qui interagit avec un élément annulaire (38) mis en prise avec un pignon conique (39) qui est claveté sur l'arbre de sortie dudit motoréducteur (12), ledit élément annulaire (38) étant monté, en rotation, sur un axe (X) et tournant de manière solidaire avec un rouleau (139) pour l'avancement dudit fil, ledit rouleau d'avancement (139) étant coaxial par rapport audit élément annulaire (38) et monté en rotation sur le même axe (X).

11. Outil d'attache (10) selon la revendication 10, **caractérisé en ce que** ledit rouleau d'avancement (139) est comprimé sur un rouleau de support (40), qui tourne librement de sorte que ledit fil coulisse entre eux.

12. Outil d'attache (10) selon la revendication 10 ou 11, **caractérisé en ce que** ledit rouleau d'avancement (139) a un ensemble périphérique de dents pour la préhension sur ledit fil.
